# EUROPEAN PATENT SPECIFICATION

(11) **EP 1 795 060 B1**
(45) Date of publication and mention of the grant of the patent: **04.04.2012**
(21) Application number: 06024565.1
(22) Date of filing: 28.11.2006
(51) Int. Cl.: A01B 59/00

(54) **Agricultural implement attachment ball holder**
Kugelpfanne für Anhänger an landwirtschaftliches Gerät
Support de rotule pour la fixation d'un outil agricole

(30) Priority: 09.12.2005 DE 202005019244 U
(43) Date of publication of application: 13.06.2007
(73) Proprietor: AGCO GmbH, 87616 Marktoberdorf (DE)
(72) Inventor: Girstenbrei, Erich, deceased (DE); Kapfer, Johannes, 87616 Marktoberdorf (DE)
(74) Representative: Morrall, Roger

(56) References cited:
- DE-A1- 3 739 377
- DE-B- 1 235 056
- GB-A- 906 761

## Description

The invention relates to a device for being carried on an agricultural tractor for the secure keeping of implement coupling balls, of various categories, provided with a through-hole.

Agricultural tractors are equipped at the rear with attachment gear for mounted and towed agricultural implements. The known attachment gear consists of two lower links and an upper link which together form a 3-point linkage. The links at their free ends each possess a coupling device for engagement by suitably formed attachment pins on the implement. In order to avoid tensions in the 3-point linkage and wear to the tractor and implement coupling parts, axially secured coupling balls, which are held by the link coupling devices, are provided which are pushed onto the implement attachment pins during the attachment of the implement.

The coupling ball to be held by the coupling device of the upper link in this case is somewhat smaller in diameter than the coupling balls to be held by the lower links. In addition, different variants of coupling balls exist. Thus, coupling balls with or without cylindrical shoulders on one or both orifices of the through-holes and also coupling balls with one-sided deflector profiles are used.

Agricultural tractors have the capacity to hold implements of different categories or sizes. Depending upon the category of the equipment the implement attachment pins have different diameters. Accordingly, the associated coupling balls have through-holes of different diameters. The outside diameter of the balls, however, remains constant, since the link coupling devices cannot be exchanged. Each agricultural tractor, therefore, carries at least 3 coupling balls and frequently more coupling balls when implements of different categories are to be used. Up to now the coupling balls have been kept in a toolbox, which is generally in the step area of the driver's cab and therefore remote from the rear region with the implement attachment gear. Such an arrangement is known from DE-A-37 39 377.

In principle, every effort is made to fit and remove an implement without using tools, thus without accessing the contents of the toolbox. This requirement however cannot be met if implements of different categories are to be used in succession.

It is an object of the invention to provide a device for the secure keeping of implement coupling balls which permits access at all times to the required coupling balls regardless of their category.

Thus, a holder is created which can be mounted in direct proximity to the attachment gear at the rear of the vehicle, for example inside a wheel cover. The coupling balls are, therefore, always in proximity to the place where they are needed.

Thus according to the present invention there is provided a holder for being carried on an agricultural tractor for holding implement coupling balls, the holder being characterised by comprising a rear wall, two side walls and an open upper end, the side walls retaining the balls within the holder with the inside surfaces of the side wall in contact with portions of the spherical surfaces of the balls which face away from the rear wall, and bias means for biasing the balls into contact with the inside surfaces of the side walls and wherein an adaptor element for partially enclosing a ball of a smaller category than the holder was designed to hold, the adaptor element being positioned between the smaller category ball and the side walls so that the smaller ball and adaptor element together occupy a similar volume to the volume occupied by a ball of the category which the holder was designed to hold.

For reasons of space, the rear wall may extend over a length of three coupling balls.

A locking member is preferably provided which extends between side walls to prevent the balls falling inadvertently from the holder.

An arrangement of the holder such that the coupling balls are held without shaking is created due to the fact that, the bias means forces the balls into contact with the inside surfaces of the side walls.

Conveniently, the bias means is provided by an arched spring arranged between the rear wall and the balls.

An exemplary embodiment of the invention is described below, by way of example only, with reference to the accompanying drawings in which:-
- Fig. 1: is a view of an implement coupling ball holder from bottom right;
- Fig. 2: is a view of the holder filled with three coupling balls of the same category from top left;
- Fig. 3: is a cutaway view of the holder on a level with the upper coupling ball in Fig. 2,
- Fig. 4: is a cutaway view of the holder on a level with the middle coupling ball in Fig. 2,
- Fig. 5: is a cutaway view of the holder on a level with the lower coupling ball in Fig. 2,
- Fig. 6: is a view of a holder for coupling balls of category 3 after insertion of an adapter element, in which a coupling ball of category 2 is held,
- Fig. 7: is a cutaway view of the holder and the adapter element in accordance with Fig. 6 on a level with the lower coupling ball,
- Fig. 8: is a perspective view of the adapter element,
- Fig. 9: is a view of the holder in accordance with Fig. 6 additionally filled with two coupling balls of category 3 and
- Fig. 10: is a view of the holder in accordance with Fig. 9 with coupling ball removed from the adapter element.

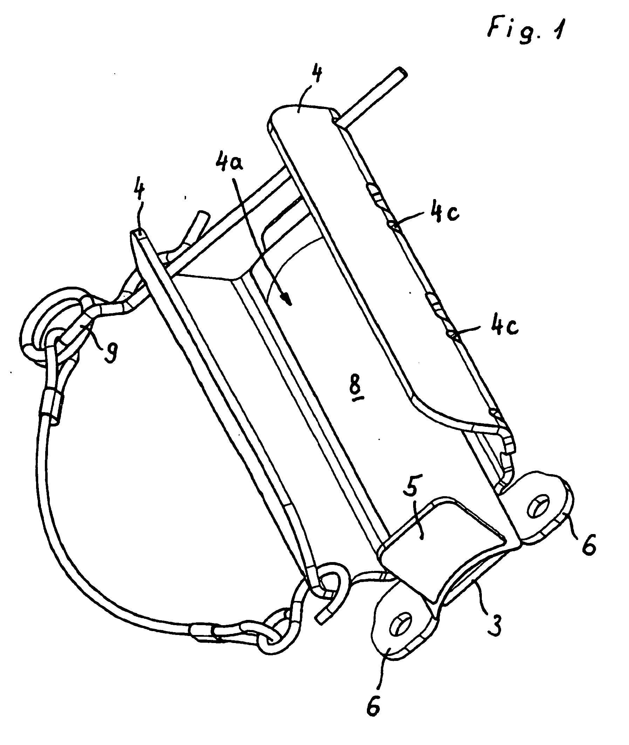

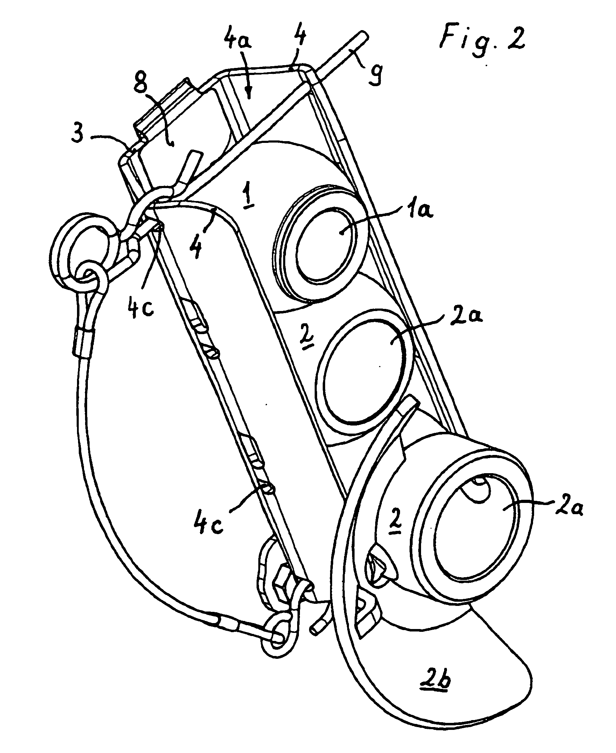

The implement coupling ball holder shown in Figs. 1 and 2 is intended to hold coupling balls of categories 3 and 3-2. More particularly, it is designed for the external dimensions of the coupling balls of the lower links, since these have a larger outside diameter than the coupling ball of the upper link. Category 3-2 represents an intermediate size, the coupling balls having the same outside diameter as coupling balls of category 3, however possessing a smaller through-hole similar to the coupling balls of category 2.

The holder is manufactured by bending a metal sheet and has a very simple structure. It comprises a rear wall 3, two side walls 4 and a base 5 attached to the lower part of the rear wall 3. A space 4a is defined between the side walls 4. Two lugs 6 are provided with holes for bolting the holder onto a tractor, in particular onto a wheel cover or fender, not illustrated. The length of the holder is sufficient to hold three coupling balls 1, 2.

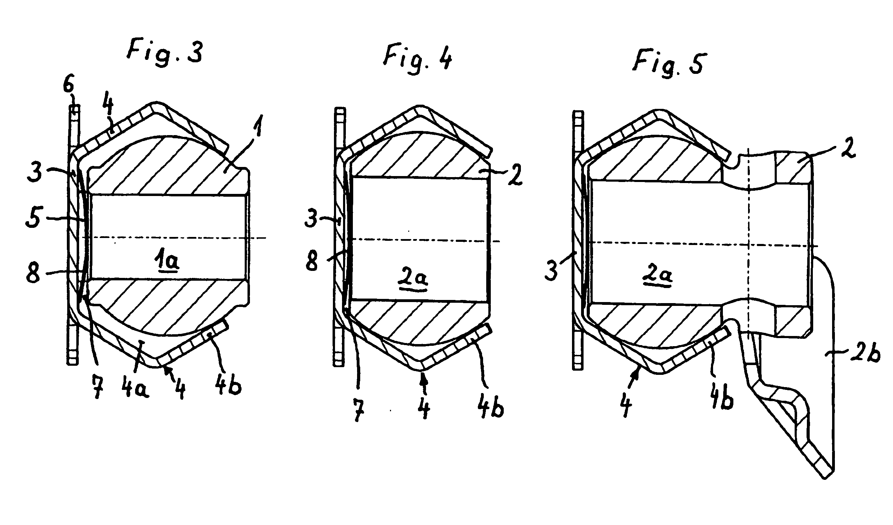

As shown particularly in Figs. 3 to 5, the side walls 4 are formed to act as a roof of the holder. Their shape and distance from each other are designed in such a way that the coupling balls 1, 2 can only be slid into the space 4a shown from the open upper end lying opposite the base 5. In this normal orientation their through-holes 1a, 2a run perpendicularly to the rear wall 3. The side walls 4 embrace the inserted coupling balls 1, 2 so that these cannot fall out of the holder on the open front side, but also allow coupling balls 2 with a deflector profile 2b (Fig. 5) to be stored. The spherical surfaces of the balls which face away from the rear wall 3 contact the inside of wall regions 4b under action of a force pushing the coupling balls 1, 2 away from the rear wall 3. Here a gap 7, whose width in the case of coupling balls of category 3-2 (Fig. 3) is greater than in the case of coupling balls of category 3, remains between the rear wall 3 and the adjacent face of the balls (Fig. 4 and 5). An arched steel spring 8, which extends over the entire length of the holder, is fixed to the rear wall 3 and supplies the necessary force to press the coupling balls 1, 2, as they are being inserted into the holder, against the inside of the wall regions 4b. The spring 8 is accommodated in this gap 7. Since the steel spring 8 and the coupling balls 1, 2 are made from the same metal, the coupling balls 1, 2 slide very easily on the steel spring 8, so that, although held without shaking, they can be very easily taken in and out of the holder. So that the coupling balls 1, 2 cannot fall out of the holder by strong impacts, a locking pin 9 is provided, which is pushed in above the uppermost coupling ball 1 and held in openings 4c in the side walls 4.

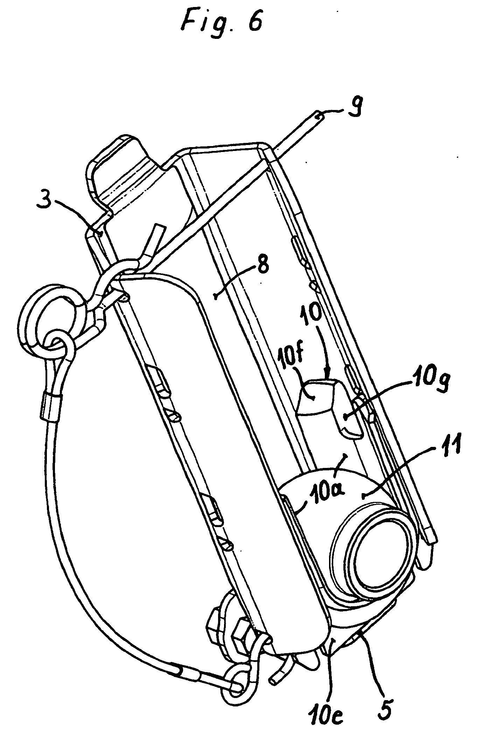

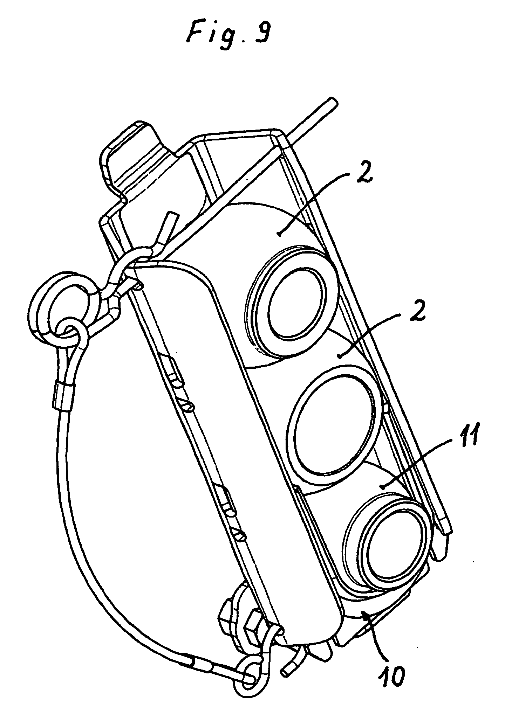

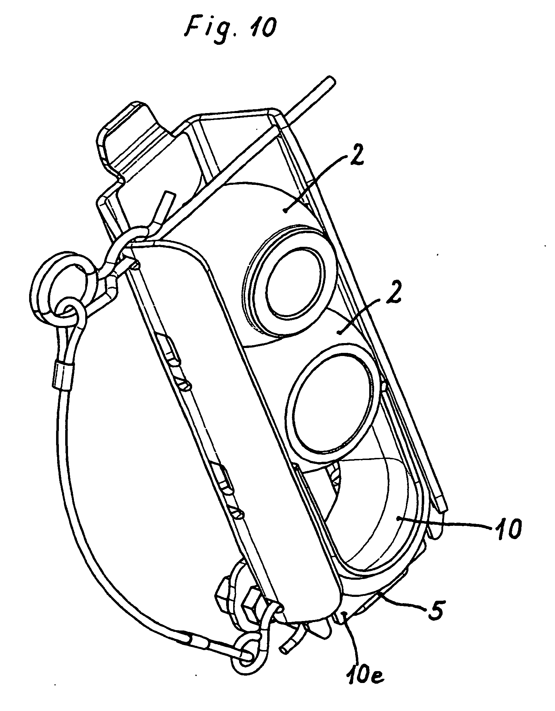

The holder described in Figs. 6 to 10 is supplemented by an adapter element 10, which renders the possibility of also holding coupling balls of a category smaller than those, for which the holder is designed, in a secure and rattle-free way. In the present exemplary embodiment although only one adapter element is used, it goes without saying that the adapter elements are formed so that, arranged one above the other, they require no more space than the coupling balls, which they replace.

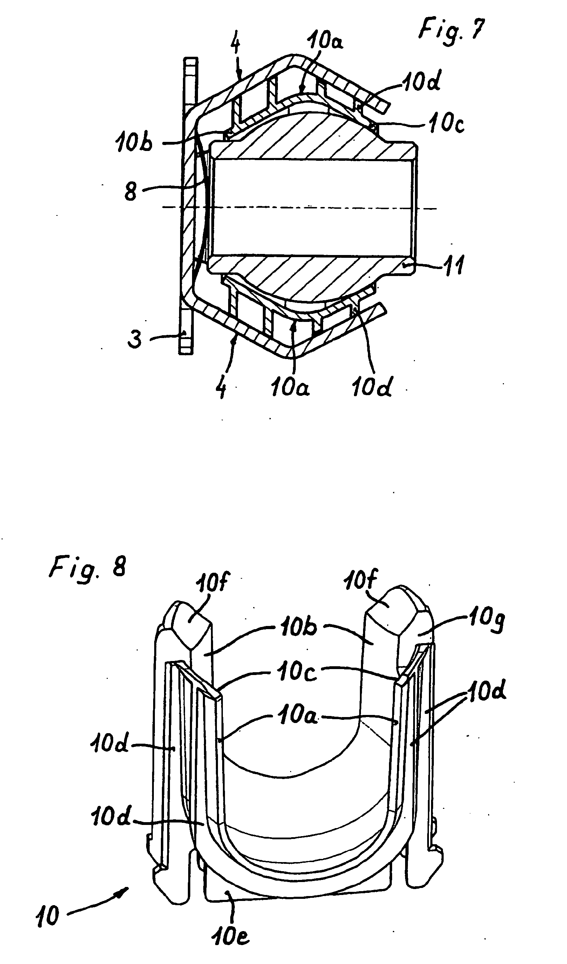

The adapter element 10 has two side walls 10a, which are connected to one another in the lower final region so as to form a U-shape. As particularly evident from Fig. 7, the walls 10a are bent in such a manner that they form inner and outer wall remote regions 10b, 10c, between which a coupling ball of category 2 is stored with only slight play. Ribs 10d, which lie against the side walls 4 of the holder are provided on the side walls 10a so that the adapter element 10 can be easily pushed into the latter, until a rib 10e rests on the base 5. The upper end of the side walls 10a has angled surfaces 10f, on which the coupling ball 2 of category 3, located above these, rests. With the corresponding length of the side walls 10a this coupling ball 2 is on exactly the same level as it would be if, in place of the adapter element 10, a coupling ball of category 3 were inserted into the holder. In addition, the side walls 10a are provided with recesses 10g, which the adapter element 10 and the coupling ball 11 to be secured by the locking pin 9. The distance of the adapter element 10, and thus of the stored coupling ball 11, from the rear wall 3 is coordinated in such a way that the steel spring 8 presses the coupling ball 11 onto the wall regions 10c, just as the coupling balls 2 press against the wall regions 4b.

## Claims

1. A holder for being carried on an agricultural tractor for holding implement coupling balls (1,2), the holder being **characterized by** comprising a rear wall (3), two side walls (4), a base (5) and an open upper end through which the balls may be inserted into the holder, the side walls (4) being shaped (4b) to retain the balls (1,2) within the holder with the inside surfaces of the side walls in contact with portions of the spherical surfaces of the balls which face away from the rear wall (3), and bias means (8) for biasing the balls (1,2) into contact with the inside surfaces of the side walls (4b) and wherein an adaptor element (10) is provided for partially enclosing a ball of a smaller category than the holder was designed to hold, the adaptor element being positioned between the smaller cat ball and the side walls (4) so that the smaller ball and adaptor element together occupy a similar volume to the volume occupied by a ball of the category which the holder was designed to hold.

2. A holder according to claim 1 **characterised in that** a locking member (9) is provided which extends between the side walls (4c) to prevent balls (1,2) falling from the holder inadvertently.

3. A holder according to any one of claims 1 to 2, **characterized in that** the rear wall (3) extends over a length of three coupling balls.

4. A holder according to any one of claims 1 to 3 **characterised in that** the bias means comprises an arched steel spring (8) arranged between the rear wall (3) and the balls (1,2).

## Patentansprüche

1. Halter, der dazu bestimmt ist, an einem landwirtschaftlichen Zugfahrzeug oder Traktor zum Halten von Kupplungskugeln (1, 2) für ein Arbeitsgerät getragen zu werden, **dadurch gekennzeichnet, dass** eine hintere Wandung (3), zwei Seitenwandungen (4), eine Basis (5) und ein offenes oberes Ende, durch welche die Kugeln in den Halter eingesetzt werden können, vorhanden sind, wobei die Seitenwandungen (4) geignet geformt (4b) sind zum Abstützen, Halten oder Fixieren der Kugeln (1, 2) in dem Halter, wobei die inneren Oberflächen der Seitenwandungen in Kontakt mit Bereichen der kugeligen Oberflächen der Kugeln, die von der rückwärtigen Wandung (3) weg weisen, stehen, mindestens ein beaufschlagendes Mittel (8) vorhanden ist zum Beaufschlagen der Kugeln (1, 2) in Kontakt mit den inneren Oberflächen der Seitenwandungen (4b), und ein Adapter-Element (10) vorhanden ist zum teilweisen Einschließen einer Kugel einer kleineren Kategorie als die, für welche der Halter für ein Halten bestimmt war, wobei das Adapter-Element zwischen der Kugel der kleineren Kategorie und den Seitenwandungen (4) angeordnet ist, so dass die kleinere Kugel und das Adapter-Element zusammen ein ähnliches Volumen einnehmen wie das Volumen, welches von einer Kugel der Kategorie eingenommen wird, für welche der Halter für ein Halten bestimmt ist.

2. Halter nach Anspruch 1, **dadurch gekennzeichnet, dass** ein Sperr- oder Verriegelungselement (9) vorhanden ist, welches sich zwischen den Seitenwandungen (4c) erstreckt, um zu vermeiden, dass die Kugeln (1, 2) unerwünscht aus dem Halter fallen.

3. Halter nach einem der Ansprüche 1 bis 2, **dadurch gekennzeichnet, dass** sich die hintere Wandung (3) über eine Länge von drei Kupplungs-Kugeln erstreckt.

4. Halter nach einem der Ansprüche 1 bis 3, **dadurch gekennzeichnet, dass** das beaufschlagende Mittel eine bogenförmige oder gekrümmte Stahlfeder (8) aufweist, die zwischen der hinteren Wandung (3) und den Kugeln (1, 2) angeordnet ist.

## Revendications

1. Support agencé sur un tracteur agricole afin de supporter des rotules de couplage d'outillage (1, 2), le support étant **caractérisé** dans le fait qu'il comprend une paroi arrière (3), deux parois latérales (4), une base (5) et une extrémité supérieure débouchante à travers laquelle les rotules peuvent être insérées dans le support, les parois latérales (4) étant façonnées (4b) de manière à retenir les rotules (1, 2) à l'intérieur du support, les surfaces internes des parois latérales étant en contact avec des parties des surfaces sphériques des rotules qui sont opposées à la paroi arrière (3) et des moyens d'application (8) destinés à appliquer les rotules (1, 2) en contact avec les surfaces internes des parois latérales (4b) et dans lequel un élément d'adaptation (10) est agencé afin d'envelopper partiellement une rotule d'une catégorie plus petite que celle pour laquelle le support a été conçu, l'élément d'adaptation étant positionné entre la rotule de catégorie plus petite et les parois latérales (4) de telle sorte que la rotule plus petite et l'élément d'adaptation ensemble occupent un volume similaire au volume occupé par une rotule de la catégorie pour laquelle le support a été conçu.

2. Support selon la revendication 1, **caractérisé en ce qu'**un élément de verrouillage (9) est prévu, s'étendant entre les parois latérales (4c) de manière à empêcher les rotules (1, 2) de tomber involontairement du support.

3. Support selon l'une quelconque des revendications 1 ou 2, **caractérisé en ce que** la paroi arrière (3) s'étend sur une longueur de trois rotules de couplage.

4. Support selon l'une quelconque des revendications 1 ou 3, **caractérisé en ce que** le moyen d'application comprend un ressort en acier cintré (8) agencé entre la paroi arrière et les rotules (1, 2).
